(19) Europäisches Patentamt
European Patent Office
Office européen des brevets

(11) **EP 4 253 105 A1**

(12) **EUROPEAN PATENT APPLICATION**
published in accordance with Art. 153(4) EPC

(43) Date of publication:
**04.10.2023 Bulletin 2023/40**

(51) International Patent Classification (IPC):
**B60G 17/019** (2006.01)    **G01G 19/08** (2006.01)
**G01G 23/00** (2006.01)    **B62D 61/12** (2006.01)

(21) Application number: **21898258.5**

(22) Date of filing: **23.06.2021**

(86) International application number:
**PCT/KR2021/007879**

(87) International publication number:
**WO 2022/114429 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020  KR 20200165189**

(71) Applicant: **Autovision Corporation
Siheung-si, Gyeonggi-do 15012 (KR)**

(72) Inventors:
• **KIM, Chang Yul
Incheon 21082 (KR)**
• **GU, Gwang Min
Daejeon 34140 (KR)**
• **KIM, Seong Tae
Daejeon 35367 (KR)**
• **HEO, Pil Won
Daejeon 34074 (KR)**

(74) Representative: **Habermann, Hruschka &
Schnabel
Patentanwälte
Montgelasstraße 2
81679 München (DE)**

(54) **LOAD MEASURING APPARATUS, FOR VEHICLE, MEASURING LOAD SUPPORTED BY AXLE, METHOD FOR SAME, AND LIFT AXLE CONTROL SYSTEM EQUIPPED WITH LOAD MEASURING APPARATUS**

(57)    Disclosed are a load measuring apparatus and method for a vehicle, which measures a weight supported by an axle, and a lift axle control system including a load measuring apparatus. The load measuring apparatus of the present invention may measure an amount of minute deformation when an axle of a cargo vehicle including a lift axle is deformed by a loaded weight and two points of the axle are moved away from each other. In addition, an auto-calibration method of calculating a proportional constant K between an amount of deformation of the axle and an axle weight is proposed.

FIG. 2

EP 4 253 105 A1

## Description

## Technical Field

The present invention relates to a load measuring apparatus and method which measures a tensile displacement of an axle due to a loaded weight using a small load cell configured to measure a force and then calculates the loaded weight of a vehicle, and a lift axle control system equipped with the load measuring apparatus.

## Background Art

An axle described in the present invention may be precisely understood to include an axle housing which accommodates the axle. Measuring a weight of a load applied on an axle of a traveling vehicle, specifically, a cargo vehicle, is required for many reasons including overweight prevention, lift axle control, and the like. There is a set standard to a weight supported per axle, and loading beyond the standard may cause damage to a vehicle or road. Article 77 of the Road Act of the Republic of Korea, Article 79 of the Enforcement Decree of the same Act, Article 39 of the Road Traffic Act, and Article 22 of the Enforcement Decree of the same Act limit a weight to 40 tons gross weight and 10 tons per axle in consideration of road breakage and safety. However, since it is difficult for a driver of a cargo vehicle to estimate how much load weight is applied on the vehicle, the driver frequently violates a gross weight or allowable load weight per axle.

One method widely used to reduce the weight per axle is to use a lift axle. The lift axle is a type of axle mainly used in medium and larger-sized cargo vehicles, is an axle that can be lowered and lifted as necessary instead of being fixed to a chassis, and is used in a method of solving an overweight problem. The lift axle is lowered and lifted according to operation of a lift air bellows and a load air bellows. An air bellows is also known as an "air spring" or "airbag." When the lift air bellows is inflated by a predetermined air pressure, the lift axle is lifted, and on the contrary, when the load air bellows is inflated, the lift axle is lowered to share and support a loaded weight. The lift air bellows 401 and the load air bellows 401 are operated by a pneumatic circuit and can be controlled directly by the driver or controlled automatically.

Although measuring a load weight applied on an axle (hereafter, referred to as an "axle weight") is required for various reasons, the measuring is also essential for lift axle control, and various methods for the measuring have been proposed. The methods are implemented using various vehicle components disposed along a path through which a weight of a load is transmitted to the ground. When a load is applied on a vehicle, pressures of a leaf spring and a tire are changed, a distance between a frame and an axle is changed due to deformation of the leaf spring, and a concentrated weight generated at a coupling portion between the frame and the spring and a weight generated at a coupling portion between the spring and the axle are changed by the load, and thus a loaded weight can be measured by measuring the changes.

Among them, components with large amount of deformation are easily deformed by internal forces and friction forces transmitted in various directions. A typical example thereof is the leaf spring. Since the deformation of the leaf spring is large, the leaf spring is frequently used to measure a loaded weight. For example, Publication No. 10-2009-0073976 of the Korean Intellectual Property Office discloses a method of calculating a weight by measuring an inclination of a spring caused by a loaded weight, Korean Publication No. 10-1999-0004089 discloses a method of installing a load cell on a connecting portion between a chassis and a spring.

However, components with large amounts of deformation may frequently cause hysteresis phenomenon between a weight and the amount of deformation, there is a problem that a change due to a loaded weight is not linear. The leaf spring also has hysteresis phenomenon due to friction, and when there is a stopper, a large measurement error occurs since deformation does not occur any more at a weight of a predetermined value or greater. In addition, since a size of an apparatus which recognizes sagging of a spring of a cargo vehicle is generally large, it is not easy to install the apparatus under a chassis, and since the apparatus recognizes the sagging through a mechanical method, it is difficult to secure durability.

## Measurement using Load Cell

Meanwhile, a load cell is used in a general method of measuring a force. The load cell can measure various forces and can be installed between an upper plate and a suspension system (for example, a spring) of a vehicle to directly measure a loaded weight of the vehicle. However, since the loaded weight ranges from a several tons to several tens of tons, and the loaded weight per axle also reaches ten tons, a large and expensive load cell having a wide measurement range is required. Although it is generally difficult to adopt the large load cell due to burden of a price, since the large load cell has also problems of securing an installation space and durability against vibrations and impacts, the method of using the load cell is rarely used.

## Deformation of Axle

An axle is one vehicle component deformed by a loaded weight. The axle of a vehicle is a part which supports a weight of the vehicle using wheels coupled to the axle and is divided into a driving wheel axle which transmits power generated by an engine or a driven wheel axle which does not transmit driving power. In addition, according to a suspension method, the axle is divided into an integral axle in which left and right wheels are coupled using one axle or a split axle in which left and right wheels move independently.

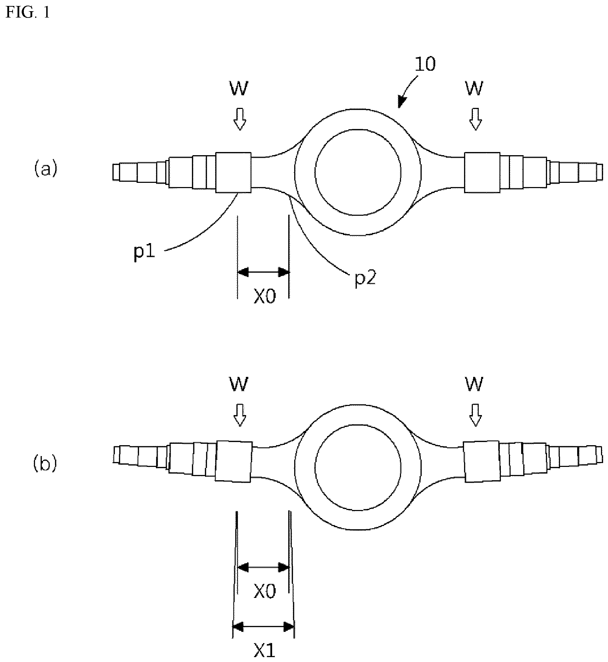

The axle is the most rigid component compared to the other components of the vehicle and therefore has the least amount of deformation. It is minutely bent in units of micrometers ($\mu$m) roughly. A vertical force applied on the axle of a cargo vehicle is a loaded weight. Referring to FIG. 1, when a weight W of a vehicle is transmitted to an axle through the leaf spring, the straight pipe-shaped axle is slightly bent, and thus an upper portion of the axle is compressed and a lower portion thereof expanded in units of micrometers.

[Related Art]

1. Korean Patent Publication No. 10-2009-0073976 (APPARATUS AND METHOD FOR MEASURING WEIGHT OF VEHICLE)
2. Korean Patent Publication No. 10-1999-0004089 (APPARATUS FOR MEASURING AND VERIFYING CARGO LOAD OF TRUCK)
3. Korean Patent Publication No. 10-2013-0061904 (DEVICE FOR MOUNTING SENSOR FOR AXIAL LOAD MONITORING)
4. Korean Patent No. 10-0884233 (MEASURING APPARATUS FOR WEIGHT OF TRUCK)

**Technical Problem**

Accordingly, the present invention is directed to providing a load measuring apparatus and method which measures a tensile displacement of an axle due to a loaded weight using a small load cell and then calculates the loaded weight of a vehicle. Accordingly, the present invention is directed to solving a problem that, as a load cell is conventionally used in a method of measuring a force directly applied by a loaded weigh to an axle or suspension system, a large load cell having a wide measurement range is used to calculate a loaded weight of a vehicle.

The present invention is also directed to providing a load measuring apparatus and method in which, when a small load cell is installed in an axle assembly, the small load cell is installed to be spaced from the axle assembly to amplify a minute deformation of an axle so as to improve the reliability of a measurement value and a problem of separation of or damage to the load cell due to vibrations is solved.

The present invention is also directed to providing a lift axle control system using a load measuring apparatus.

**Technical Solution**

In the present invention for achieving the objectives, a load measuring apparatus may measure an axle weight of a vehicle based on a fact that an axle is linearly deformed within a rated allowable weight range per axle. When a characteristic curve between an amount of deformation in a longitudinal direction of an axle housing against a weight of a load is measured, facts are found that there is very little hysteresis and an amount of deformation is not saturated and approximated by a first order linear expression are confirmed within at least 130% of a designed allowable weight of the axle which is an elastic deformation section. Accordingly, when an amount of minute deformation of the axle housing is measured, a very accurate weight may be calculated.

The present invention applies a theory for beam analysis to an axle. The axle is deformed by a vertical force (gravitational force) and a horizontal force. Since the deformation caused by the horizontal force is negligible compared to the vertical force, the axle may be bent by the vertical force, and the axle shows a linearly deformed characteristic by a loaded weight which is a vertical force even though a change is very small. The applicant has confirmed through an experiment that, when a load of 10 tons is loaded on a 5-ton medium cargo vehicle, the deformation of a driving axle in a vertical direction is about 200 micrometers, and in this case, the deformation of the axle is linear in proportion to the loaded weight.

**Load Measuring Apparatus**

A load measuring apparatus of the present invention includes a measurement terminal and a control apparatus, and the measurement terminal includes a load cell, a first connection part, a second connection part, and a communication part.

The load cell is disposed between a first point and a second point of an axle assembly of the vehicle and measures a displacement in which the first point and the second point are moved away from each other by a longitudinal expansion of an axle when the axle of the vehicle is bent by the loaded weight. The first connection part and the second connection part connect two ends of the load cell to the first point and the second point and amplify the longitudinal expansion of the axle to provide the amplified longitudinal expansion to the load cell spaced apart from the axle assembly and fixed at the first point and the second point. A measurement value of the load cell is provided to a control apparatus through the communication part.

The control apparatus calculates the axle weight supported by the axle using a measurement value of the measurement terminal.

According to the embodiment, the first point (P1) may be set on a suspension system side fixing part (11) which fixes the axle to a suspension system, and

the second point (P2) may be set on a central fixing part (15) provided on a side of a lower axle housing central portion (13). In addition, the load cell may include a strain gauge deformed by a force which moves the first point and the second point away from each other while the axle is bent by the weight.

According to the embodiment, the control apparatus calculates the axle weight by multiplying an amount of deformation of the axle measured by the measurement terminal in a state in which a load is loaded on the vehicle by a proportional constant and adding an empty vehicle weight supported by the axle in an empty vehicle state.

According to another embodiment, the proportional constant may be obtained by equation.

$$K = \frac{W_m - W_0}{L_m - L_0}$$

In this case, the $W_m$ is an axle weight measured by a scale in a maximum weight state, the $W_0$ is an axle weight measured by the scale in the empty vehicle state, the $L_m$ is a measurement value of the measurement terminal in the maximum weight state, and the $L_0$ is a measurement value of the measurement terminal in the empty vehicle state. Meanwhile, the control apparatus may be connected to the scale to receive the $W_m$ and the $W_0$ from the scale.

According to another embodiment, the control apparatus may further include an input unit, which receives the axle weight ($W_m$) and the axle weight ($W_0$) measured by the scale, or may be connected to the scale to receive the axle weight ($W_m$) and the axle weight ($W_0$) from the scale.

According to another embodiment, the control apparatus may receive measurement values from a plurality of measurement terminals installed on all axles of the vehicle to calculate support weights of all the axles and add the support weights of all the axles to calculate a total weight of the vehicle.

According to another embodiment, the control apparatus of the load measuring apparatus of the present invention may further include a network interface which is wirelessly connected to an external vehicle control server. In this case, the control apparatus may provide a total weight of the vehicle and a weight of a load obtained by subtracting an empty vehicle weight from the total weight of the vehicle to the vehicle control server through the network interface.

According to another embodiment, the load measuring apparatus of the present invention may further includes an air pressure sensor which measures an air pressure of an air tank which drives a lift axle of the vehicle. In this case, the control apparatus provides a control signal to a lift axle driving part to lower the lift axle when a value of an axle weight is greater than or equal to a preset value.

According to still another embodiment, a lift axle control system installed in a vehicle including a lift axle may be formed using the load measuring apparatus. The lift axle control system includes the load measuring apparatus and a lift axle driving part which drives the lift axle. In this case, the control apparatus controls the lift axle driving part to lower the lift axle when a value of an axle weight is greater than or equal to a preset value.

The present invention also provides a method of measuring the axle weight of a vehicle using the measuring apparatus. The method of measuring the axle weight includes measuring, by the measurement terminal, a displacement in which a first point and a second point of an axle assembly are moved away from each other by a longitudinal expansion of an axle when the axle of the vehicle is bent by loading and calculating, by a control apparatus, the axle weight supported by the axle using a measurement value of the measurement terminal.

The measuring of the axle weight includes placing a load cell of the measurement terminal between the first point and the second point, amplifying the longitudinal expansion of the axle and providing the amplified longitudinal expansion to the load cell, wherein a first connection part and a second connection part of the measurement terminal connect the two ends of the load cell to the first point and the second point so that the load cell is spaced apart from the axle assembly and fixed between the first point and the second point, and providing, by a communication part of the measurement terminal, a measurement value of the load cell to the control apparatus.

**Advantageous Effects**

A load measuring apparatus of the present invention can simply measure an amount of minute deformation (a force or displacement) of an axle (axle housing) of a vehicle when the axle is bent by loading and a distance between two arbitrary points set on the axle is increased, by using a small load cell having a narrow measurement range.

Accordingly, there is no need to directly measure a force due to a loaded weight directly applied on an axle or suspension system using a large load cell having a wide measurement range in order to calculate the loaded weight like in a traditional case. Spatial, structural, and economical burden of installing the large load cell on a chassis which becomes a problem when the loaded weight is conventionally measured using the load cell is almost eliminated by the present invention.

Meanwhile, it is experimentally confirmed that a longitudinal deformation of the axle is very small and shows linear characteristics within an allowed loading range. Accordingly, a proportional constant between the output of the load cell and the axle weight can be simply calculated through several measurements, and the small load cell can be installed in each vehicle through a simple adjustment process.

In another aspect, since measurement terminals of the present invention are fixedly spaced apart from the axle, it amplifies the amount of the deformation of the axle to measure the deformation instead of directly measuring the deformation. There is an effect of converting the amount of minute deformation of the axle into a meaningful value, and thus the measurement terminals can be implemented to operate as commercial products.

Description of Drawings

FIG. 1 is a set of views illustrating a change in axle of a cargo vehicle due to a loaded weight.
FIG. 2 is a block diagram illustrating an axle load measuring apparatus for a vehicle of the present invention.
FIG. 3 is a view illustrating a measurement terminal according to one embodiment of the present invention.
FIG. 4 is a view illustrating a state in which the measurement terminal of FIG. 3 is installed on an axle.
FIG. 5 is a flowchart for describing a method of calculating a proportional constant K of the present invention.
FIG. 6 is a view illustrating a vehicle in which a lift axle control system of the present invention is installed.
FIG. 7 is a block diagram illustrating the lift axle control system of the present invention.
FIG. 8 is a block diagram illustrating an axle load measuring apparatus for a vehicle according to another embodiment of the of the present invention.

**Modes of the Invention**

Hereinafter, the present invention will be described in more detail with reference to the accompanying drawings.

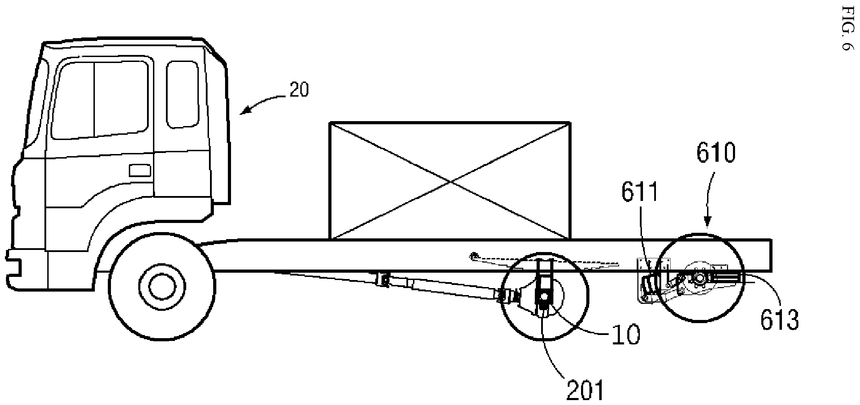

First, for the sake of convenience in the description, a weight applied on an axle is simply referred to as an "axle weight." For example, a weight supported by a specific driving axle is called a "driving axle weight," a weight supported by a lift axle is called a "lift axle weight," and a weight supported by a steering axle is called a "steering axle weight." Although a vehicle to which a load measuring apparatus 200 of the present invention is applied may be equipped with a lift axle 610 as in FIG. 6, the lift axle 610 is not an essential element.

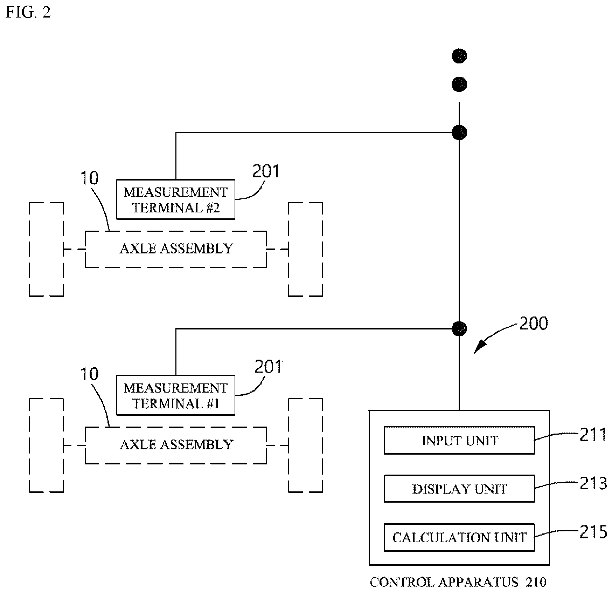

Referring to FIG. 2, the load measuring apparatus 200 of the present invention includes one or more measurement terminals 201 and a control apparatus 210 installed in the vehicle.

The measurement terminal 201 may be installed on any axle among a plurality of axles (a steering axle or driving axle) of the vehicle or also installed on each axle, or a plurality of measurement terminals 201 may be installed on one axle. Accordingly, the plurality of measurement terminals 201 may be installed in one vehicle. The measurement terminals 201 are the same, and only installation positions thereof are different. Meanwhile, as described above, an axle 10 in the present invention precisely means to include an axle housing which accommodates an axle.

The measurement terminal 201 is fixed to a lower side of the axle 10 of the vehicle and measures an amount of deformation, that is longitudinal expansion, when the axle 10 is bent by loading or the like. To this end, two ends of the measurement terminal 201 are fixed to a first point P1 and a second point P2 spaced apart from each other on the axle 10, and the measurement terminal 201 measures a tensile force applied between the first point P1 and the second point P2 when the axle 10 is bent by a loaded weight. The first point P1 and the second point P2 do not necessarily need to be points on the axle 10 but may also be points on an axle assembly including fixing parts 11 and 15 which fix the axle 10 to the vehicle. This is because the axle 10 and the fixing parts 11 are 15 are mutually fixed, and thus deformation of the axle assembly linearly reflects deformation of the axle 10. Accordingly, the first point P1 and the second point P2 may be points on the axle 10 or points on the fixing parts 11 and 15 which fix the axle 10 to a suspension system (not shown) or the like. Accordingly, in the present invention, the axle at which the first point P1 and the second point P2 are positioned may be an axle assembly.

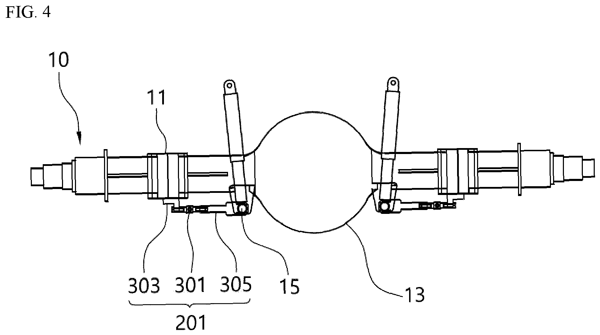

However, since the measurement terminal 201 does not measure the deformation of the fixing parts, the first point and second point should not be set at the same fixing part. FIG. 4 is a view illustrating an example in which the first point P1 and the second point P2 are set on a rear axle which is one of fixed axles, wherein the first point P1 is set on a suspension system side-fixing part 11 which fixes the axle 10 to the suspension system (not shown), and the second point P2 is set on a central fixing part 15 provided on a side of a lower axle housing central portion 13.

The first point P1 and the second point P2 may be positioned on a line parallel to a virtual longitudinal central axis of the axle 10 in order that an influence of other types of deformation of the axle is minimized when measuring.

Meanwhile, since the axle 10 has a rigid body, the axle 10 is only slightly deformed within an allowable loaded weight range. Accordingly, it is preferable for the measurement terminal 201 to even slightly amplify and measure a tensile displacement of the axle 10 compared to directly measuring tensile deformation of the axle 10. As the measurement terminal 201 is spaced apart from the axle 10, a risk of separation of the measurement terminal 201 due to vibrations of the axle 10 is also reduced.

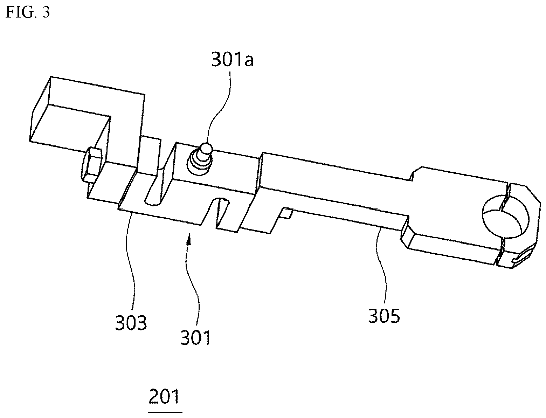

Referring to FIGS. 3 and 4, the measurement terminal 201 according to one embodiment of the present invention includes a load cell 301, a first connection part 303 which fixes one end of the load cell 301 at the first point P1, a second connection part 305 which fixes the other end of the load cell 301 at the second point P2, and a communication part 301a. Since two ends of the first connection part 303 are implemented in a form to be fixed to the load cell 301 and the first point P1, and two ends of the second connection part 305 are implemented in a form fixed to the load cell 301 and the second point P2, the two ends of the first connection part 303 and the two ends of the second connection part 305 are determined according to shapes of the load cell 301, the first point P1, and the second point P2. The load cell 301 is fixedly spaced apart from the axle 10 by the first connection part 303 and the second connection part 305.

The load cell 301 illustrated in FIG. 4 is a type which measures a tensile force using a strain gauge and has a main body formed in an "⇄" shape. Since the load cell 301 does not directly measure a loaded weight, a magnitude of a measurable weight (or force) of the load cell 301 does not need to be considered when a loaded weight is measured, and the load cell 301 capable of measuring a magnitude of a force pulling the load cell 301 while the first point P1 and the second point P2 of the axle 10 are moved away from each other is sufficient. According to an experiment, generally, a load cell capable of measuring less than 500 Kg is sufficient.

In the example of FIG. 4, one end of the first connection part 303 is bolt-assembled to the load cell 301, and the other end is fixedly welded to the suspension system side fixing part 11 which supports the axle 10. One end of the second connection part 305 is bolt-assembled to the load cell 301, and the other end is fixedly fitted to the central fixing part 13 which supports a central portion of the axle 10. For example, the other end of the second connection part 305 is fitted to the lower end of the shock absorber coupled with the central fixing part 13. The load cell 301 is fixed to the first point p1 and the second point p2 by the first connection part 303 and the second connection part 305 in a state in which the load cell 301 is spaced apart from the axle 10.

When the axle 10 is bent by a loaded weight and the lower side of the axle 10 is expanded, the first point P1 and the second point P2 are moved away from each other, and the load cell 301 of the measurement terminal 201 receives a force (tensile force) which moves the first point P1 and the second point P2 away from each other. A measurement value of the load cell 301 is a value proportional to a magnitude of the tensile force which moves the first point P1 and the second point P2 away from each other and a value proportional to a displacement between the first point P1 and the second point P2 moved away from each other.

The communication part 301a transmits the output (the measurement value) of the load cell 301 to the control apparatus 210. The communication part 301a may use various communication protocols, such as a controller area network (CAN), which is widely used as a means of vehicle communication, or other conventional communication means.

The control apparatus 210 calculates an "axle weight" of the axle 10, that is a measurement target, using the measurement value provided by the measurement terminal 201 and, to this end, includes an input unit 211 which receives a user's control command or various types of information which will be described below, a display unit 213 which display various types of information, and a calculation unit 215.

Since the axle 10 is linearly bent within at least a rated loaded weight range, the measurement value provided by the measurement terminal 201 linearly shows an axle weight within at least the rated loaded weight range. The applicant has confirmed that a measurement value of the measurement terminal 201 linearly varies in the range from a value in an empty vehicle state in which there is no load to a value in a maximum loaded weight state defined by law through an experiment. Accordingly, one simple method of calculating a loaded weight is that a measurement value of the measurement terminal 201 is multiplied by a proportional constant K.

The proportional constant K is a proportional constant between a measurement value of the measurement terminal 201 and a weight supported by the axle 10, a proportional constant between a displacement between the first point P1 and the second point P2 of the axle 10 caused by a weight and the weight supported by the axle 10, and a proportional constant between a force of pulling the load cell 301 as the first point P1 and the second point P2 of the axle 10 are moved away from each other by the weight and the weight supported by the axle 10. The proportional constant K may also be obtained by comparing a weight $W_o$ of the axle of the vehicle and a measurement value $L_0$ of the measurement terminal in an empty vehicle state $O,1$ and a weight $W_m$ of the axle and a measurement value $L_m$ of the measurement terminal in a maximum weight state $0,2$ and then using the following Equation 1. Meanwhile, a weight in the maximum weight state $0,2$ may be set to be greater than or equal to a rated maximum loaded weight.

$$[Equation\ 1]$$

$$K = \frac{W_m - W_o}{L_m - L_o}$$

Accordingly, an axle weight $W_r$ currently supported by the axle 10 may be calculated using the following Equation 2 after reading a measurement value $L_r$ of the measurement terminal 201.

[Equation 2]

$$W_r = K(L_r - L_o) + W_o$$

Values obtained in several loaded weight states 0,3 which fall between the empty vehicle state and the maximum loaded weight state may also be further used in order to obtain the proportional constant K. Calibration of the control apparatus 210 to calculate the proportional constant K will be described below.

The plurality of measurement terminals 201 may be installed on one axle to be spaced apart from each other. For example, the first point and the second point may be set at each of two sides of the axle 10, and each of two measurement terminals 201 may be installed at the first point and the second point. In this case, the control apparatus 210 may individually obtain a proportional constant for each measurement terminal and individually calculate an axle weight for each measurement terminal. The control apparatus 210 may determine an axle weight of the axle by simply averaging axle weights calculated by the plurality of measurement terminals 201. Alternatively, a loaded weight may be obtained using an equation obtained from a correlation between measurement values of the plurality of measurement terminals 201.

**Proportional Constant Calibration (Calculation of Proportional Constant K)**

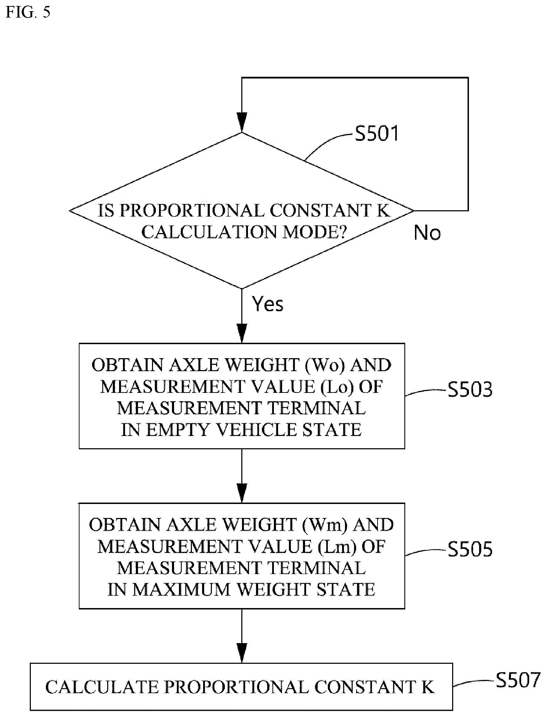

There are many methods to obtain a proportional constant K. The control apparatus 210 may have a preset or already in use proportional constant K. However, the proportional constant K must be calibrated to the vehicle conditions. Hereinafter, an auto-calibration method of the present invention will be described with reference to FIG. 5.

<Entering proportional constant K calculation mode: S501>

The control apparatus 210 enters a proportional constant K calculation mode according to control of the user.

<Obtaining weight of axle in empty vehicle state and measurement value of measurement terminal: S503>

The vehicle in an empty vehicle state is moved on a scale so that the axle 10 to be measured is moved on the scale, and a weight $W_o$ of the axle in the empty vehicle state is measured. The calculation unit 215 enters the proportional constant K calculation mode, displays an input screen (not shown), to which the weight $W_o$ of the axle in the empty vehicle state is input, in the display unit 213, and waits for the user's input. The user input the measurement value of the scale to the control apparatus 210. At the same time, the calculation unit 215 reads a measurement value of the measurement terminal 201, which is a measurement value $L_o$ of the measurement terminal in the empty vehicle state.

<Obtaining weight of axle in maximum weight state and measurement value of measurement terminal: S505>

The vehicle in the maximum loaded state is moved on the scale so that the axle 10 to be measured is moved on the scale, and a weight $W_m$ of the axle in the maximum loaded weight state is measured. The calculation unit 215 displays an input screen (not shown), to which the weight $W_m$ of the axle in the maximum weight state is input, in the display unit 213 and, when the user inputs the weight, displays the weight in the display unit 213. At the same time, the calculation unit 215 reads a measurement value $L_m$ of the measurement terminal. The order of the steps S503 and S505, which are performed after the step S501, may also be changed.

<Calculating proportional constant K: S507>

The calculation unit 215 obtains a proportional constant K by substituting the weights $W_m$ and $W_o$ obtained through the steps S501 and S503 and the measurement values Lo and $L_m$ into Equation 1.

A proportional constant K auto-calibration of the load measuring apparatus of the present invention is performed through the above method. According to a system configuration, the scale (not shown) for measuring a weight of the vehicle may be connected to the control apparatus 210. In this case, the weights $W_o$ and $W_m$ measured by the scale in the steps S503 and S505 may be automatically provided to the control apparatus 210.

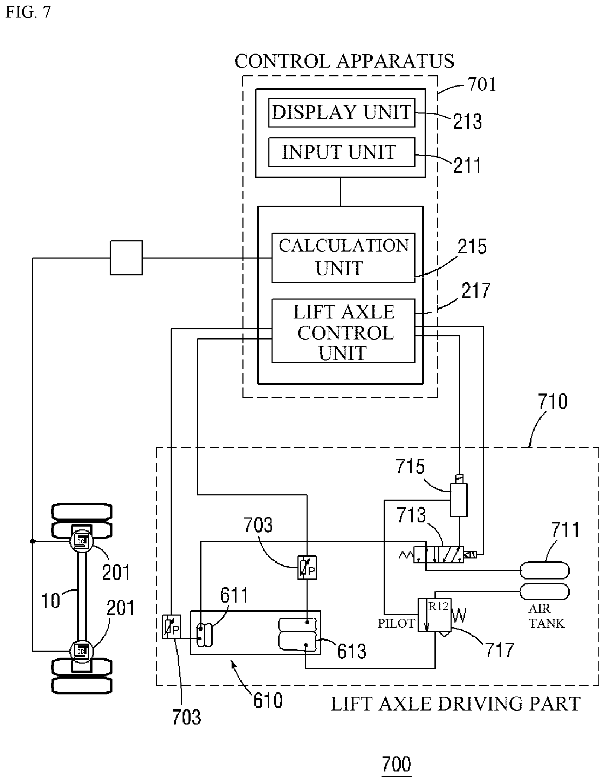

**LIFT AXLE CONTROL SYSTEM (FIGS. 6 and 7)**

The control apparatus may be installed on a vehicle 20 in which the lift axle 610 is installed as in FIG. 6. FIG. 7 is a view illustrating a control apparatus 701 installed in the vehicle 20 to which the lift axle 610 is attached. The control apparatus 701 further includes a lift axle control unit 217 in addition to the control apparatus 210 of FIG. 2.

To control the lift axle, the control apparatus 701 may be connected to a lift axle driving part 710, which controls the lift axle 610, to form one lift axle control system 700, and thus the lift axle 610 may be directly controlled. Hereinafter, the lift axle control system 700 of the present invention will be described with reference to FIG. 7.

The lift axle control system 700 of the present invention includes an air pressure sensor 703 and the lift axle driving part 710 in addition to the plurality of measurement terminals 201 and the control apparatus 701. The lift axle control unit 217 of the control apparatus 701 controls the lift axle driving part 710 to lower the lift axle 610 when a value of a weight of a fixed axle measured using the measurement terminal 201 is greater than or equal to a preset reference value.

The air pressure sensor 703 measures an air pressure of an air tube, that is, each of a lift air bellows 611 and a load air bellows 613 belonging to the lift axle driving part 710, and the control apparatus 701 reads a measurement value of the air pressure sensor 703.

The lift axle driving part 710 includes an air tank 711, a solenoid valve 713, an electric regulator 715, and a relay valve 717 and operates the lift axle 610 according to a control signal of the lift axle control unit 217. An air pressure of the air tank 711 is supplied to the lift air bellows 611 and the rod air bellows 613 through the solenoid valve 713. The electric regulator 715 is controlled by the lift axle control unit 217 of the control apparatus 701 to control a magnitude of a pilot pressure supplied to the relay valve 717 from the solenoid valve 713. The relay valve 717 controls an air pressure provided to the load air bellows 613 from the air tank 711 in proportion to the pilot pressure.

The lift axle control unit 217 may control the solenoid valve 713 and the motorized regulator 715 to lift or lower the lift axle 610. To lift the lift axle 610, the control apparatus 701 controls the solenoid valve 713 to provide an air pressure of the air tank 711 to the lift air bellows 611. In this case, since air in the load air bellows 613 is discharged to the outside through the solenoid valve 713, the lift air bellows 611 is inflated to lift the lift axle 610. As the lift axle 610 is lifted, a support weight of the lift axle is transferred to a weight of the fixed axle.

To lower the lift axle 610, an air pressure of the air tank 711 is supplied to the electric regulator 715 through the solenoid valve 713 according to control of the lift axle control unit 217, and the lift axle control unit 217 controls the electric regulator 715 to increase a pilot pressure of the relay valve 717. Through the relay valve 717, an air pressure of the air tank 711 is supplied to the load air bellows 613 in proportional to the increased pilot pressure to inflate the load air bellows 613. In this case, air in the lift air bellows 611 is discharged to the outside through the solenoid valve 713. As the lift axle 610 is lowered by the inflation of the load air bellows 613, a partial weight supported by the fixed axle is converted to a support weight of the lift axle.

The inflation of the lift air bellows 611 and the load air bellows 613 due to the pressure becomes the support weight of the lift axle. The lift axle control unit 217 may calculate a support weight of the lift axle by measuring a pressure of each of the lift air bellows 611 and the load air bellows 613 using the air pressure sensor 703.

According to another embodiment, unlike FIG. 7, a lift axle driving part 710 may include a lift axle controller (not shown) which performs operation of a lift axle control unit 217. An air pressure sensor 703 may be a component of the lift axle driving part 710, and a control apparatus 210 of FIG. 2 may be connected to the lift axle controller (not shown). In this case, a calculation unit 215 of the control apparatus 210 may provide a control signal to the lift axle controller (not shown) to control a lift axle 610. As necessary, the control apparatus 210 may also check a lift axle control state by receiving a measurement value of the air pressure sensor 703 and checking an air pressure of an air bellows of the lift axle 610.

**Another Embodiment**

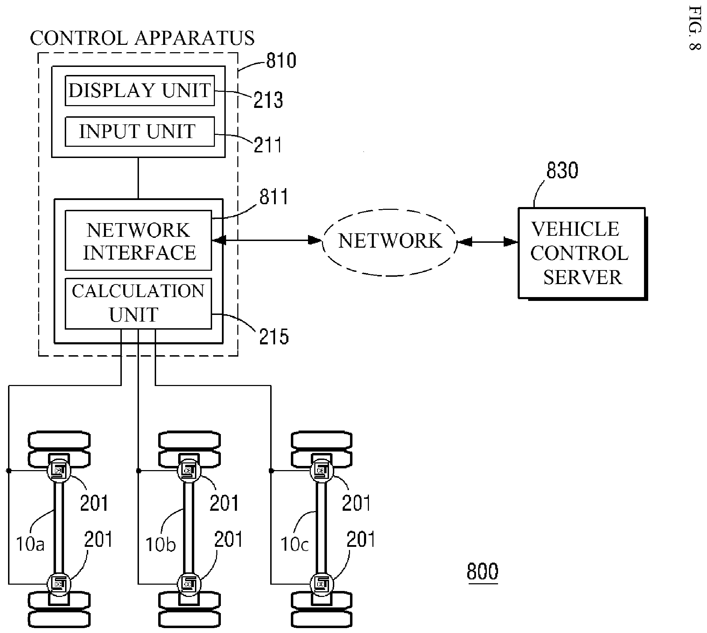

Referring to FIG. 8, a load measuring apparatus 800 includes the same components as the load measuring apparatus 200 of FIG. 2, and measurement terminals 201 are installed in all axles 10a, 10b, and 10c of a vehicle. In addition, a calculation unit 215 of a control apparatus 810 may calculate a loaded weight of a load loaded on the vehicle or a total vehicle weight including all the loaded weight and a weight of the vehicle.

FIG. 8 shows an example in which the load measuring apparatus 800 is installed in the vehicle including a steering axle 10a and two driving axles 10b and 10c, wherein two measurement terminals 201 are installed on each of the steering axle 10a and the two driving axles 10b and 10c, and thus a total of six measurement terminals 201 are installed. The calculation unit 215 calculates a support weight per axle, that is, a support weight of the steering axle and a support weight of each of the two driving axles using measurement values provided by the six measurement terminals 201. As described above, the calculation unit 215 may set a proportional constant for each of the six measurement terminals 201, or a proportional constant for each axle. In addition, as described above, the calculation unit 215 may calculate a support weight per axle through various methods using two measurement terminals installed on each axle.

When all support weights per axle are calculated, the calculation unit 215 adds the support weights to calculate a total weight of the vehicle, and calculates a loaded weight of a load loaded on the vehicle by subtracting an empty vehicle weigh from the total weight.

According to the embodiment, the control apparatus 810 of the load measuring apparatus 800 may further includes a network interface 811 in addition to the control apparatus 210 of FIG. 2 and may be connected to a vehicle control server 830 of the outside through the Internet. Since the network interface 811 may be mainly used in the traveling vehicle, any network interface compatible with wireless communication methods capable of accessing the Internet may be used as the network interface 811. For example, the network interface 811 may use mobile communication networks, broadband wireless communication networks, satellite communication networks, or the like.

The calculation unit 215 may periodically or non- periodically calculates a total support weight and/or loaded weight of the vehicle and transmit the total support weight and/or loaded weight to the vehicle control server 830 through the network interface 811.

Although exemplary embodiment of the present invention has been illustrated and described above, the present invention is not limited to the specific embodiments, variously modified embodiments may be made by those skilled in the art without departing from the gist of the present invention defined by the appended claims, and the modified embodiments should not be understood separately from the technical spirit or outlook of the present invention.

**Claims**

1. A load measuring apparatus which measures a loaded weight of a vehicle, comprising:

   a measurement terminal including a load cell, which is disposed between a first point and a second point of an axle assembly of the vehicle and measures a displacement in which the first point and the second point are moved away from each other by a longitudinal expansion of an axle when the axle of the vehicle is bent by the loaded weight, a first connection part and a second connection part which connect two ends of the load cell to the first point and the second point and amplify the longitudinal expansion of the axle to provide the amplified longitudinal expansion to the load cell spaced apart from the axle assembly and fixed at the first point and the second point, and a communication part through which a measurement value of the load cell is provided to a control apparatus; and
   the control apparatus which calculates an axle weight supported by the axle using a measurement value of the measurement terminal.

2. The load measuring apparatus of claim 1, wherein the load cell includes a strain gauge deformed by a force which moves the first point and the second point away from each other while the axle is bent by the weight.

3. The load measuring apparatus of claim 1, wherein the control apparatus calculates the axle weight by multiplying an amount of deformation of the axle measured by the measurement terminal in a state in which a load is loaded on the vehicle by a proportional constant and adding an empty vehicle weight supported by the axle in an empty vehicle state.

4. The load measuring apparatus of claim 3, wherein the proportional constant is obtained using equation

$$K = \frac{W_m - W_o}{L_m - L_o}$$

, wherein:

   the $W_m$ is an axle weight measured by a scale in a maximum weight state;
the $W_o$ is an axle weight measured by the scale in the empty vehicle state;
the $L_m$ is a measurement value of the measurement terminal in the maximum weight state; and
the $L_o$ is a measurement value of the measurement terminal in the empty vehicle state.

5. The load measuring apparatus of claim 4, wherein the control apparatus further includes an input unit, which receives the axle weight ($W_m$) and the axle weight ($W_o$) measured by the scale, or is connected to the scale to receive the axle weight ($W_m$) and the axle weight ($W_o$) from the scale.

6. The load measuring apparatus of claim 1, wherein the control apparatus receives measurement values from a plurality of measurement terminals installed on all axles of the vehicle to calculate support weights of all the axles and adds the support weights of all the axles to calculate a total weight of the vehicle.

7. The load measuring apparatus of claim 1, wherein:

   the control apparatus further includes a network interface which is wirelessly connected to an external vehicle control server; and
   the control apparatus provides a total weight of the vehicle and a weight of a load obtained by subtracting an empty vehicle weight from the total weight of the vehicle to the vehicle control server through the network interface.

8. The load measuring apparatus of claim 1, wherein:

   the first point (P1) is set on a suspension system side fixing part (11) which fixes the axle to a suspension system; and
   the second point (P2) is set on a central fixing part (15) provided on a side of a lower axle housing central portion (13).

9. A method of measuring a weight of a vehicle, comprising:

   measuring, by a measurement terminal, a displacement in which a first point and a second point of an axle assembly are moved away from each other by a longitudinal expansion of an axle when the axle of the vehicle is bent by a loaded weight; and
   calculating, by a control apparatus, an axle weight supported by the axle using a measurement value of the measurement terminal,
   wherein the measuring includes placing a load cell of the measurement terminal between the first point and the second point,
   amplifying the longitudinal expansion of the axle and providing the amplified longitudinal expansion to the load cell, wherein a first connection part and a second connection part of the measurement terminal connect the two ends of the load cell to the first point and the second point so that the load cell is spaced apart from the axle assembly and fixed between the first point and the second point, and

providing, by a communication part of the measurement terminal, a measurement value of the load cell to the control apparatus.

10. The method of claim 9, wherein the calculating of the axle weight includes multiplying, by the control apparatus, an amount of deformation of the axle measured by the measurement terminal in a state in which a load is loaded on the vehicle by a proportional constant, and then adding an empty vehicle weight supported by the axle in an empty vehicle state to the axle weight.

11. The method of claim 10, wherein the proportional constant is obtained using a value of the axle weight measured by a scale and a measurement value of the measurement terminal in the empty vehicle state and a maximum weight state in which the vehicle is loaded and equation $K = \dfrac{W_m - W_o}{L_m - L_o}$ , wherein:

the $W_m$ is the axle weight measure by the scale in the maximum weight state;
the $W_o$ is the axle weight measured by the scale in the empty vehicle state;
the $L_m$ is the measurement value of the measurement terminal in the maximum weight state; and
the $L_o$ is the measurement value of the measurement terminal in the empty vehicle state.

12. The method of claim 11, wherein the calculating includes:

receiving, by the control apparatus, the axle weight ($W_m$) and the axle weight ($W_o$) measured by the scale from a user through an input unit; or
receiving, by the control apparatus connected to the scale, the axle weight ($W_m$) and the axle weight ($W_o$) from the scale.

13. The method of claim 9, further comprising receiving, by the control apparatus, measurement values from a plurality of measurement terminals installed in all axles of the vehicle to calculate support weights of all the axles and adding the support weights of all the axles to calculate a total weight of the vehicle.

14. The method of claim 9, further comprising providing, by the control apparatus, a weight of the load obtained by subtracting an empty vehicle weight from a total weight of the vehicle and the total weight of the vehicle to an external vehicle control server through a network interface.

15. The method of claim 9, wherein:

the first point (P1) is set on a suspension system side fixing part (11) which fixes the axle to a suspension system; and
the second point (P2) is set on a central fixing part (15) provided at a side of a lower axle housing central portion (13).

FIG. 1

FIG. 2

MEASUREMENT TERMINAL #2 — 201

10

AXLE ASSEMBLY

MEASUREMENT TERMINAL #1 — 201

10

AXLE ASSEMBLY

200

INPUT UNIT — 211

DISPLAY UNIT — 213

CALCULATION UNIT — 215

CONTROL APPARATUS 210

FIG. 3

301a

303

301

305

201

FIG. 4

FIG. 5

```
                                                         ┌──────────────┐
                                                         │              │
                            ┌────── S501                 │              │
                          ◇                              │              │
              ╱                     ╲                     │
           ╱                           ╲                  │
        ╱   IS PROPORTIONAL CONSTANT K    ╲────────────────┘
        ╲        CALCULATION MODE?        ╱   No
           ╲                           ╱
              ╲                     ╱
                          ◇
                          │ Yes
                          ▼
    ┌─────────────────────────────────────┐
    │   OBTAIN AXLE WEIGHT (Wo) AND        │
    │   MEASUREMENT VALUE (Lo) OF          │──── S503
    │   MEASUREMENT TERMINAL               │
    │   IN EMPTY VEHICLE STATE             │
    └─────────────────────────────────────┘
                          │
                          ▼
    ┌─────────────────────────────────────┐
    │   OBTAIN AXLE WEIGHT (Wm) AND        │
    │   MEASUREMENT VALUE (Lm) OF          │──── S505
    │   MEASUREMENT TERMINAL               │
    │   IN MAXIMUM WEIGHT STATE            │
    └─────────────────────────────────────┘
                          │
                          ▼
    ┌─────────────────────────────────────┐
    │   CALCULATE PROPORTIONAL CONSTANT K  │──── S507
    └─────────────────────────────────────┘
```

FIG. 6

FIG. 7

CONTROL APPARATUS — 701

DISPLAY UNIT — 213

INPUT UNIT — 211

CALCULATION UNIT — 215

LIFT AXLE CONTROL UNIT — 217

710

715

713

711

703

611

201

10

201

703

613

PILOT

R12

W

AIR TANK

717

610

LIFT AXLE DRIVING PART

700

FIG. 8

<table>
<tr><td colspan="2" align="center">**INTERNATIONAL SEARCH REPORT**</td><td colspan="2">International application No.<br><br>**PCT/KR2021/007879**</td></tr>
</table>

**A. CLASSIFICATION OF SUBJECT MATTER**

**B60G 17/019**(2006.01)i; **G01G 19/08**(2006.01)i; **G01G 23/00**(2006.01)i; **B62D 61/12**(2006.01)i

According to International Patent Classification (IPC) or to both national classification and IPC

**B. FIELDS SEARCHED**

Minimum documentation searched (classification system followed by classification symbols)

B60G 17/019(2006.01); B60G 17/017(2006.01); B60G 17/018(2006.01); G01G 19/02(2006.01); G01G 19/08(2006.01); G01G 19/12(2006.01); G01L 1/22(2006.01); G01L 5/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 하중(weight), 측정(measurement), 로드셀(load cell), 비례상수 (proportional constant)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1306851 B1 (NAE WOI KOREA LTD.) 10 September 2013 (2013-09-10)<br>See paragraphs [0031], [0034], [0035], [0044], [0045] and [0054]-[0056] and figures 3-5 and 8. | 1-3,6-10,13-15 |
| A | | 4,5,11,12 |
| Y | KR 10-2165337 B1 (AUTOVISION COPORATION) 13 October 2020 (2020-10-13)<br>See paragraphs [0038], [0042], [0044], [0047], [0050] and [0053] and figures 1-3. | 1-3,6-10,13-15 |
| Y | KR 10-2009-0073976 A (BAYTECH KOREA INC) 03 July 2009 (2009-07-03)<br>See paragraphs [0076]-[0088] and figure 4. | 3,7,10,14 |
| A | KR 10-2023057 B1 (KIM, Chang Yul) 19 September 2019 (2019-09-19)<br>See paragraph [0034] and figures 1 and 2. | 1-15 |
| A | EP 0132930 A1 (TRW PROBE ELECTRONICS CO., LTD.) 13 February 1985 (1985-02-13)<br>See claims 1, 2 and 4 and figures 3-5. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 September 2021** | **10 September 2021** |

| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
|---|---|
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/007879**

| Patent document cited in search report | | | Publication date (day/month/year) | Patent family member(s) | | | Publication date (day/month/year) |
|---|---|---|---|---|---|---|---|
| KR | 10-1306851 | B1 | 10 September 2013 | None | | | |
| KR | 10-2165337 | B1 | 13 October 2020 | None | | | |
| KR | 10-2009-0073976 | A | 03 July 2009 | KR | 10-1017274 | B1 | 28 February 2011 |
| KR | 10-2023057 | B1 | 19 September 2019 | None | | | |
| EP | 0132930 | A1 | 13 February 1985 | AU | 2902584 | A | 06 December 1984 |
| | | | | CA | 1227948 | A | 13 October 1987 |
| | | | | JP | 60-007307 | A | 16 January 1985 |
| | | | | US | 4626041 | A | 02 December 1986 |
| | | | | US | 4673047 | A | 16 June 1987 |

Form PCT/ISA/210 (patent family annex) (July 2019)

**EP 4 253 105 A1**

**Patent documents cited in the description**

- KR 1020090073976
- KR 1019990004089
- KR 1020130061904
- KR 100884233